Europäisches Patentamt

European Patent Office

Office européen des brevets

(11) Veröffentlichungsnummer: **0 103 815**
A2

(12) # EUROPÄISCHE PATENTANMELDUNG

(21) Anmeldenummer: 83108828.1

(22) Anmeldetag: 07.09.83

(51) Int. Cl.³: **H 02 B 1/10**
**H 02 G 3/12**

(30) Priorität: 22.09.82 DE 8226670 U

(43) Veröffentlichungstag der Anmeldung:
28.03.84 Patentblatt 84/13

(84) Benannte Vertragsstaaten:
AT IT SE

(71) Anmelder: SIEMENS AKTIENGESELLSCHAFT
Berlin und München Wittelsbacherplatz 2
D-8000 München 2(DE)

(72) Erfinder: Galli, Anton
Pittersberg Nr. 39
D-8451 Ebermannsdorf(DE)

(54) Installationsdose.

(57) Installationsdose, insbesondere Wandeinbaudose, zum Aufnehmen von Installationsgeräten, wie Schalter, Steckdosen und anderen derartigen Einsätzen, die mittels in Schraublöchern in der Dosenwand geführter Schrauben solche Installationsgeräte an einem Hängebügel befestigen läßt. Erfindungsgemäß its vorgesehen, daß die Schrauben (2) längs ihres Schaftes auf gegenüberliegenden Seiten (4) ihres Umfangs abgeflacht sind, daß die Schraublöcher (3) korrespondierend ausgebildet sind, wobei in an sich bekannter Weise deren Lochwand zwischen ihren abgeflachten Seiten (5) um das Gewinde enger als die Schrauben zwischen ihren nicht abgeflachten Schaftseiten weit sind, daß jedoch die Schraublöcher (3) durch ihr Querschnittprofil (6) jeweils zumindest bei einem Gewindebereich und einem eingriffsfreien Bereich Anschläge (7, 8) bilden, die einen Drehbewegungsraum der Schraube zwischen Eingriff und Nichteingriff begrenzen.

FIG 1

EP 0 103 815 A2

0103815

SIEMENS AKTIENGESELLSCHAFT
Berlin und München

Unser Zeichen
VPA 82 P 3 2 9 4 E

Installationsdose

Die Erfindung bezieht sich auf eine Installationsdose, insbesondere Wandeinbaudose, zum Aufnehmen von Installationsgeräten, wie Schalter, Steckdosen und anderen derartigen Einsätzen, die mittels in Schraublöchern in der Dosenwand geführten Schrauben solche Installationsgeräte an einem Hängebügel befestigen lassen.

Üblicherweise werden Installationsgeräte in Installationsdosen durch Spreizkrallen befestigt, die an den Einsätzen angeordnet sind. Zusätzlich weisen die auf dem Markt befindlichen Installationsdosen Schrauben auf, über deren Kopf eine schlüssellochartige Ausnehmung im Hängebügel eines Installationsgerätes eingefädelt werden kann. Zusätzlich oder unabhängig von den Spreizkrallen kann ein Installationsgerät durch Festziehen der Schrauben also mittels des Hängebügels gehalten werden.

Die Schrauben zum Befestigen der Hängebügel sind umständlich zu handhaben, da in der Praxis viele Umdrehungen von zumindest zwei Schrauben durchzuführen sind, bis ein Installationsgerät mit seinem Hängebügel aufgesetzt und schließlich befestigt ist. Spreizkrallen haben andererseits den Nachteil, daß sie umständlich zu fertigen sind und in der Montagepraxis zum Bruch der Installationsdose führen können, wenn diese nicht mit Mauerwerk voll hinterfüttert ist. Der Festsitz des Einsatzes ist außerdem vom Anzugsmoment abhängig. Schließlich kann die Isolation von elektrischen Leitern durch die Spreizkrallen beschädigt werden.

No 2 Rat / 15.09.1982

Der Erfindung liegt die Aufgabe zugrunde, eine Installationsdose zu entwickeln, die das Befestigen von Installationsgeräten erleichtert und die es erlaubt, Installationsgeräte auch ohne Spreizkrallen zu fertigen.

Die Lösung der geschilderten Aufgabe erfolgt nach der Erfindung dadurch, daß die Schrauben längs ihres Schaftes auf gegenüberliegenden Seiten ihres Umfangs abgeflacht sind und daß die Schraublöcher korrespondierend ausgebildet sind, wobei in an sich bekannter Weise deren Lochwand zwischen ihren abgeflachten Seiten um das Gewinde enger als die Schrauben zwischen ihren nicht abgeflachten Schaftseiten weit sind, daß jedoch die Schraublöcher durch ihr Querschnittsprofil jeweils zumindest bei einem Gewindebereich und einem eingriffsfreien Bereich Anschläge bilden, die einen Drehbewegungsraum der Schraube zwischen Eingriff und Nichteingriff begrenzen.

Bei einer solchen Installationsdose lassen sich die Schrauben zum Befestigen eines Installationsgerätes an seinem Hängebügel leicht durch eine Vierteldrehung lösen und herausheben und danach am Hängebügel festdrücken und durch eine entgegengesetzte Vierteldrehung festziehen. Da die Befestigung eines Installationsgerätes sehr bequem und sicher wird, kann man Spreizkrallen am Installationsgerät weglassen.

Die Montage wird besonders erleichtert, wenn jeweils eine Schraube durch Mittel für ihre Unverlierbarkeit an einem zugeordneten Schraubloch gehalten ist. So kann man einerseits an der Schraubenspitze eine Schraubenfeder befestigen, die anderenseits am inneren Ende des Schraubloches gehalten ist. Besonders vorteilhaft ist es dabei, die Schraubenfeder im Ruhezustand so lange zu bemessen, daß der Schraubenkopf über den Rand der Installationsdose hinausragt. Im gelösten Zustand der Schrauben kann dann der Hängebügel besonders leicht um die Schraubenköpfe aufgesetzt werden. Dieser Vorteil wird besonders spürbar, wenn eine Installationsdose versehentlich in der Wand tiefer als das Putzniveau eingesetzt ist, wo bei konventionellen Installationsdosen die Schrauben besonders weit herausgedreht werden müssen.

Schrauben und Schraublöcher, die zusammen nach Art eines Bajonettverschlusses ineinandergreifen, sind zwar bekannt, dennoch werden Installationsdosen seit altersher mit gewöhnlichen Schrauben versehen.

Bei der Installationsdose nach der Neuerung kann das Gewinde der Schrauben jeweils in verschiedener Weise ausgebildet sein: So kann das Gewinde der Schraube mit hoher Steigung versehen werden oder auch mehrgängig ausgebildet sein.

Die Erfindung soll anhand eines in der Zeichnung grob schematisch wiedergegebenen Ausführungsbeispiels näher erläutert werden:

In Fig. 1 ist eine Installationsdose in Seitenansicht und teilweise geschnitten wiedergegeben.
In Fig. 2 ist vergrößert eine Aufsicht auf Schraubloch und Dosenrand im Ausschnitt veranschaulicht.
In Fig. 3 ist das Schraubloch nach Fig. 2 nach eingesetzter Schraube dargestellt, und zwar in der Stellung, wo das Gewinde der Schraube mit dem des Schraublochs außer Eingriff steht.
In Fig. 4 ist die Aufsicht auf Schraube und Schraubloch nach Fig. 3 im angezogenen Zustand wiedergegeben.

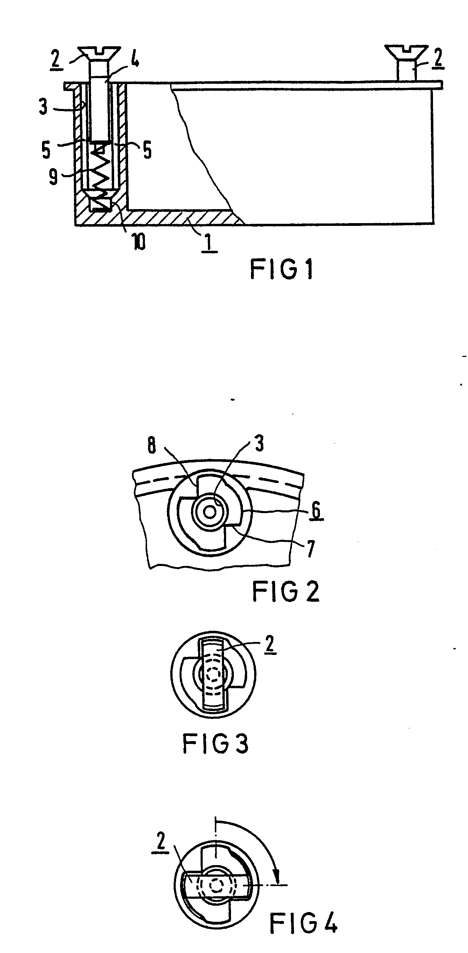

Die Installationsdose 1 nach Fig. 1 weist Schrauben 2 auf, die in Schraublöchern 3 der Dosenwand geführt sind. Hieran können Installationsgeräte mit ihrem Hängebügel befestigt werden. Das Besondere ist darin zu sehen, daß besondere Schrauben verwendet werden und daß das Schraubloch besonders ausgebildet ist:

Die Schrauben 2 sind längs ihres Schaftes auf gegenüberliegenden Seiten 4 ihres Umfangs abgeflacht, wobei die Schraublöcher 3 korrespondierend ausgebildet sind. In an sich bekannter Weise ist deren Lochwand zwischen ihren abgeflachten Seiten 5 um das Gewinde enger als die Schrauben zwischen ihren nicht abgeflachten Schaftseiten weit ausgebildet.

Die Schraublöcher 3 können jeweils durch ihr Querschnittsprofil 6 zumindest bei einem der beiden Gewindebereiche einen Anschlag 7 bilden und bei einem der beiden eingriffsfreien Bereiche einen Anschlag 8. Ein solches Anschlagspaar begrenzt dann den Drehbewegungsraum einer Schraube 2 zwischen Eingriff und Nichteingriff. Ein entsprechendes Profil kann über ganze Lochtiefe des Schraubloches ausgebildet sein, wobei in den Fig. 2 bis 4 jeweils zwei Anschlagpaare veranschaulicht sind. Eine Schraube mit seitlich abgeflachtem Kopf ist in Fig. 3 in der Stellung "außer Eingriff" wiedergegeben. In Fig. 4 ist die Schraube nach Fig. 2 um eine Vierteldrehung verdreht wiedergegeben, wodurch sie sich in der Stellung "Eingriff" befindet.

Es ist günstig, wenn jeweils eine Schraube 2 durch Mittel 9 für ihre Unverlierbarkeit an einem zugeordneten Schraubloch 3 gehalten ist. Im Ausführungsbeispiel nach Fig. 1 ist hierzu einerseits an der Schraubenspitze eine Schraubenfeder befestigt, die andererseits am inneren Ende des Schraubloches 10 gehalten ist. Vorteilhafterweise ist die Schraubenfeder so lange ausgebildet, daß sie im Ruhezustand den Schraubenkopf über den Rand der Installationsdose hinausragen läßt, wie es in Fig. 1 veranschaulicht ist. Das Gewinde der Schrauben 2 kann jeweils mit hoher Steigung ausgebildet sein, um durch die Festziehbewegung zugleich die Schraube mit ihrem Kopf an einem Haltebügel eines Installationsgerätes anliegen zu lassen. Andererseits kann das Gewinde der Schraube auch mehrgängig ausgebildet sein, um leicht zwischen verschiedenartigen Feststellpositionen des Schraubkopfes an einem Hängebügel wählen zu können.

5 Patentansprüche
4 Figuren

Patentansprüche

1. Installationsdose, insbesondere Wandeinbaudose, zum Aufnehmen von Installationsgeräten, wie Schalter, Steckdosen und anderen derartigen Einsätzen, die mittels in Schraublöchern in der Dosenwand geführter Schrauben solche Installationsgeräte an einem Hängebügel befestigen läßt, d a d u r c h  g e k e n n z e i c h n e t, daß die Schrauben (2) längs ihres Schaftes auf gegenüberliegenden Seiten (4) ihres Umfangs abgeflacht sind, daß die Schraublöcher (3) korrespondierend ausgebildet sind, wobei in an sich bekannter Weise deren Lochwand zwischen ihren abgeflachten Seiten (5) um das Gewinde enger als die Schrauben zwischen ihren nicht abgeflachten Schaftseiten weit sind, daß jedoch die Schraublöcher (3) durch ihr Querschnittsprofil (6) jeweils zumindest bei einem Gewindebereich und einem eingriffsfreien Bereich Anschläge (7, 8) bilden, die einen Drehbewegungsraum der Schraube zwischen Eingriff und Nichteingriff begrenzen.

2. Installationsdose nach Anspruch 1, d a d u r c h  g e k e n n z e i c h n e t, daß jeweils eine Schraube (2) durch Mittel (9) für ihre Unverlierbarkeit an einem zugeordneten Schraubloch (3) gehalten ist.

3. Installationsdose nach Anspruch 2, d a d u r c h  g e k e n n z e i c h n e t, daß einerseits an der Schraubenspitze eine Schraubenfeder befestigt ist, die andererseits am inneren Ende des Schraubloches (10) gehalten ist, wobei die Schraubenfeder im Ruhezustand so lange bemessen ist, daß der Schraubenkopf über den Rand der Installationsdose hinausragt.

4. Installationsdose nach Anspruch 1, d a d u r c h
g e k e n n z e i c h n e t, daß das Gewinde der Schraube
(2) mit hoher Steigung ausgebildet ist.

5. Installationsdose nach Anspruch 1, d a d u r c h
g e k e n n z e i c h n e t, daß das Gewinde der Schraube
mehrgängig ausgebildet ist.

0103815

1/1     82 P 3294

FIG 1

FIG 2

FIG 3

FIG 4